# EUROPEAN PATENT SPECIFICATION

(11) **EP 0 441 211 B1**
(45) Date of publication and mention of the grant of the patent: **26.10.1994**
(21) Application number: 91101039.5
(22) Date of filing: 28.01.1991
(51) Int. Cl.: H01S 3/06, H01S 3/07, G02B 6/28

(54) **Active fibre optical amplifier, with double-core portions, having a wide signal wavelength band**
Doppelkern-Aktivfaser als optischer Breitband-Signal-Verstärker
Amplificateur optique à large bande à fibre active à double-noyaux

(30) Priority: 07.02.1990 IT 1928090
(43) Date of publication of application: 14.08.1991
(73) Proprietor: PIRELLI CAVI S.p.A., 20126 Milano (IT)
(72) Inventor: Grasso, Giorgo, Monza (MI) (IT); Scrivener, Paul Laurence, Southampton Hampshire (GB)
(74) Representative: Giannesi, Pier Giovanni

(56) References cited:
- WO-A-86/02171
- FR-A- 2 452 119
- OPTICAL FIBER COMMUNICATION CONFERENCE. TECHNICAL DIGEST.PAPER TUL 14. 24 February 1986, New York, US;pages 62 - 63 K. OKAMOTO et al.:"Fiber optic spectral filter consisting of concatenated dual-core fibers"
- PATENT ABSTRACTS OF JAPAN vol. 12, no. 254 (E-634)(3101) 16 July 1988;& JP-A-63042190

## Description

The present invention relates to a wide signal band optical amplifier for optical fibre lines operating with a transmission signal in a predetermined wavelength band and particularly, but not exclusively, to such an amplifier for optical fibre telecommunication lines.

It is known that optical fibres having the core doped with particular substances, say, the ions of rare earths, have characteristics of stimulated emission suitable for the use as laser sources and as optical amplifiers.

Such fibres in fact can be supplied with a luminous source at a particular wavelength, which is able to bring the ions of the dopant substance to an excited energy state, or pumping band, from which the ions themselves decay spontaneously in a very short time to a laser emission state, in which they remain for a relatively longer time.

When a fibre having a high number of ions at the excited state in the emission level is crossed by a luminous signal having a wavelength corresponding to such laser emission state, the signal causes the transition of the excited ions to a lower level, with a luminous emission having the same wavelength as the signal; thus a fibre of this type can be used to obtain an amplification of an optical signal.

Starting from the excited state the decay of the ions also occurs spontaneously and this generates a random emission which constitutes a background noise which is superimposed over the stimulated emission, corresponding to the amplified signal.

The luminous emission generated by the introduction into the doped, or active, fibre of luminous pumping energy can occur at several wavelengths, typical of the dopant substance, thus originating a fluorescence spectrum of the fibre.

With the object of obtaining the maximum amplification of the signal by means of a fibre of the above type, in combination with a high signal/noise ratio, for optical telecommunications, it is normal to use a signal generated by a laser emitter and having a wavelength corresponding to a peak of the fluorescence spectrum curve of the fibre incorporating the dopant substance.

In particular for the amplification of optical telecommunications signals it is convenient to use active fibres with a core doped with Erbium ions (Er³⁺); but Erbium's fluorescent spectrum, in the range of the interesting wavelengths, has an especially narrow emission peak and this therefore imposes the use as the source of the transmission signal of a laser emitter operating at a particular wavelength, with a limited tolerance, because signals outside such range of tolerance would not be adequately amplified, while a strong spontaneous emission would occur at such a peak wavelength, constituting a background noise which would strongly penalise the quality of transmission.

Laser emitters having the above characteristics, that is, operating at Erbium's emission peak, are, on the other hand, difficult and costly to manufacture, while the usual industrial production offers laser emitters, such as, say, semiconductor lasers (In, Ga, As), having several characteristics which make them suitable for use in telecommunications, but also having a fairly wide tolerance as regards the emission wavelength. Thus only a limited number of laser emitters of such kind has the emission at the above peak wavelength.

While for some applications, such as, say, submarine telecommunications lines, it can be acceptable to use transmission signal emitters operating at a particular wavelength value, obtained, say, by making a careful selection among commercial production lasers, so that only those which have the emission within a small area of the laser emission peak of the amplifier fibre, such a process is not financially acceptable for lines of other kinds, such as, say, urban communication lines, where the containment of installation costs is of special importance.

For example, a fibre doped with Erbium for laser emission, has an emission with a peak around 1536 nm and for a range of 5 nm from this value the emission has a high intensity and may be used for the amplification of a signal in the same wavelength range. Commercially produced semiconductor lasers which may be used for transmission, however, are usually accomplished with emission wavelength values ranging from 1520 to 1570 nm.

It is thus seen that a considerable number of industrially produced lasers of this kind is outside the range suitable for amplification with Erbium and cannot therefore be used for generating telecommunications signals in lines equipped with Erbium amplifiers of the type described above.

It is, however, known that fibres doped with Erbium have an area of the emission spectrum of high intensity that is substantially constant in the wavelength range contiguous with the above mentioned peak, sufficiently wide to include a large part of the emission range of the above interesting commercial lasers.

However in a fibre of this type a signal provided at a wavelength far from the maximum emission peak would be amplified to a limited extent, while the spontaneous transitions from the laser emission state in the fibre occur prevalently with emission at the peak wavelength of the spectrum, at 1536 nm, generating a background noise which will be further amplified while moving along the length of the fibre, superimposing itself on the useful signal.

In order to use active fibres doped with Erbium for the amplification of telecommunications signals generated by semiconductor laser emitters of a commercial type, as described above, the need arises for filtering Erbium's spontaneous peak emission, in the length of the active fibre, so that such emission at an undesired wavelength shall not take pumping energy away from the amplification of the signal and shall not superimpose itself on it.

For this purpose an active fibre may be used having two cores, in one of which the transmission signal and the pumping energy are sent, while in the other there is a light absorbing dopant. If the two cores are optically coupled at the peak wavelength of the spontaneous emission, it will be transferred to the second core, where it is absorbed without returning to superimpose itself on the transmission wavelength.

Such an active fibre, described in the Italian patent application No. 22654 A/89 in the name of the same Applicant, executes an effective filtering action of the undesired wavelength but in some applications, where it is subjected to mechanical or thermal stresses, and in particular to a state of twist, there can be an alteration of the optical coupling characteristics between the cores, and the wavelength value transferred to the second, absorbing core, is modified.

The problem thus arises of having available an active optical fibre for use in optical amplifiers that can be used in combination with laser emitters of the transmission signal of a commercial type, without imposing upon them significant qualitative limitations, that is substantially insensitive to deformation stresses and states imposed upon it during the construction of the amplifier or occurring during the laying and operational stages of the amplifier in the line.

The object of the present invention is to provide a doped optical fibre amplifier that can offer a satisfactory amplification in a sufficiently extended range of wavelengths, such as to allow the use of commercial laser emitters, eliminating the material's spontaneous emissions at an undesired wavelength, which constitute background noise of a high intensity with respect to the transmission signal, maintaining such characteristics stable during operational conditions.

The present invention provides a wide signal band optical amplifier, particularly for optical fibre telecommunications lines operating with a transmission signal in a predetermined wavelength band, comprising a dichroic coupler, suitable for multiplexing a transmission signal and luminous pumping energy in a single outgoing fibre, and an active optical fibre containing a fluorescent dopant, connected to the output fibre of the dichroic coupler and to a telecommunications line fibre suitable for receiving and transmitting an amplified signal, characterised in that the active optical fibre comprises alternating first and second portions, each first portion being constituted by an optical fibre having two cores, and each second portion being constituted by an optical fibre having one core containing said fluorescent dopant, the first cores of the first portions being optically connected to the cores of the second portions, and the second cores of the first portions being interrupted at the extremities of the first portions, the two cores of the first portions being optically coupled together in a predetermined wavelength band included in the wavelength range of the laser emission of the fluorescent dopant first core and different from the transmission signal band such that emission at said predetermined wavelength range, constituting background noise with respect to the transmission signal, is substantially transferred from the first core to the second core of each first portion.

In a preferred embodiment the second core of each first portion of the active optical fibre contains a dopant having a high luminous absorption in the laser emission range of the active fibre's dopant; conveniently the dopant having a high luminous absorption contained in the second core is constituted by the same fluorescent substance present in the active fibre.

The first core of each first portion of the active optical fibre contains a fluorescent dopant, or, as an alternative, the first core of each first portion of the active optical fibre may have no fluorescent dopant.

Conveniently the fluorescent dopant substance present in the active fibre, at least inside its second portions having single core, is Erbium.

According to another embodiment the dopant substance present in the second core is a substance having a high luminous absorption over the entire laser emission range of the active fibre's dopant, chosen among Titanium, Vanadium, Chromium or Iron, which is present at least in part in its lower valence state.

The length of each first portion is equal to or greater than the beating length between the first and second cores thereof coupled in the selected coupling band between the cores.

The amount of dopant having a high luminous absorption of the second core and the coupling characteristics of the fibre cores are correlated so as to determine in the second core a quenching length less than 1/10th of the beating length between the coupled cores.

In a particular embodiment of the invention the second core has no light absorbing dopant and each two-core fibre portion has a length equal to a whole multiple of one beating length, with a tolerance of 10% of the beating length itself.

In the case where the fluorescent dopant of the active fibre is Erbium, the first and second cores are optically coupled together between 1530 and 1540 nm.

The first core of first portion is arranged coaxially with external surface of the fibre forming the first portion and is in alignment with the cores of said second portions of the active fibre and with the cores of the fibres to which the amplifier is connected, while the second core, at its extremities, faces cladding material of the adjacent fibres.

At least the first of the two cores of the first portions is suitable for allowing monomodal luminous propagation at the transmission wavelength and at the pumping wavelength.

Advantageously the active fibre has second portions, containing fluorescent dopant, included between two consecutive double-core first portions, having a length not greater than that corresponding to a maximum obtainable gain of 15 dB at the coupling wavelength between the first and second cores of the first portions and preferably between 1 and 5 dB.

Preferably at least one extremity of the active fibre is constituted by a double-core first portion.

The double-core first portions are mechanically curvable for fine adjustment of the coupling wavelength band between the first and second cores thereof.

Conveniently each double-core first portion is rigidly constrained to a respective support plate, substantially undeformable under operational conditions.

In addition each double-core first portion is rigidly constrained to the respective support plate in a curvature condition corresponding to the desired coupling wavelength band between the first and second cores thereof.

In order that the invention may be well understood, embodiments thereof, which are given by way of example only, will now be described, with reference to the accompanying drawings, in which:
- Fig. 1: is a diagram of an optical amplifier using an active fibre;
- Fig. 2: is a diagram of the energy transitions of a fibre of the type which may be used for an amplifier according to the diagram of Fig. 1, suitable for generating a stimulated emission;
- Fig. 3: is a diagram of the stimulated emission curve of an optical fibre made of silicon, doped with Er³⁺;
- Fig. 4: is an enlarged schematic view of an optical amplifier embodying the invention;
- Fig. 5: shows the active fibre of the amplifier in cross-section along the line V-V of Fig. 4;
- Fig. 6: is a graph of the light propagation constants within the cores of the active fibre in relation to the wavelength;
- Fig. 7: shows a part of an active optical fibre of an amplifier embodying the invention and comprising a portion having two cores and superimposed thereon the representation of the luminous power transfer curve between one core and the other at the coupling wavelength;
- Fig. 8: shows a part of an active optical fibre of an amplifier embodying the invention and comprising a portion having two cores having a length equal to one beating length; and
- Fig. 9: shows a part of an active optical fibre of an amplifier embodying according the invention with portions having two cores, having a constrained curvature.

For the purpose of amplifying a signal in optical fibres for telecommunications, amplifiers making use of optical fibres may conveniently be used.

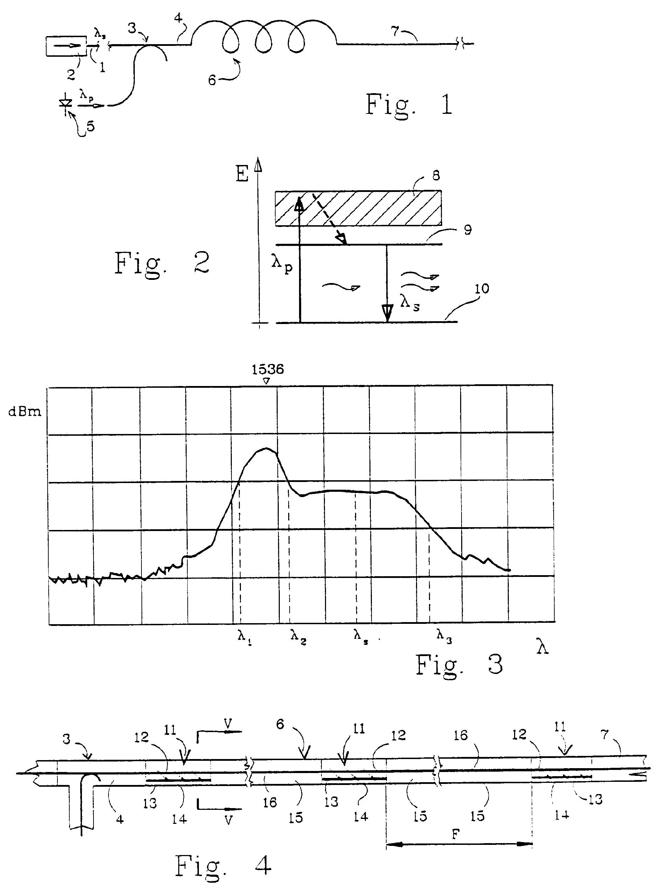

The structure of such amplifiers is illustrated schematically in Fig. 1, where there is shown an optical fibre 1 for telecommunications, along which there is sent a transmission signal, having a wavelength λs, generated by a laser signal emitter 2.

Such a signal, attenuated after a certain length of line, is sent to a dichroic coupler 3 where it is combined on a single outgoing fibre 4 with a pumping signal having a wavelength λp, generated by a pumping laser emitter 5.
An active fibre, indicated generally at 6, connected to fibre 4 leaving the coupler, constitutes the amplifying element for the signal, which is thus introduced into the line fibre 7 to continue towards its destination.

To form the active fibre 6, constituting the unit's amplifying element, according to a preferred embodiment of the invention it is convenient to use an optical fibre made of silicon whose core is doped in solution with Er₂O₃, which allows an advantageous amplification of the transmission signal, exploiting Erbium's laser transitions.

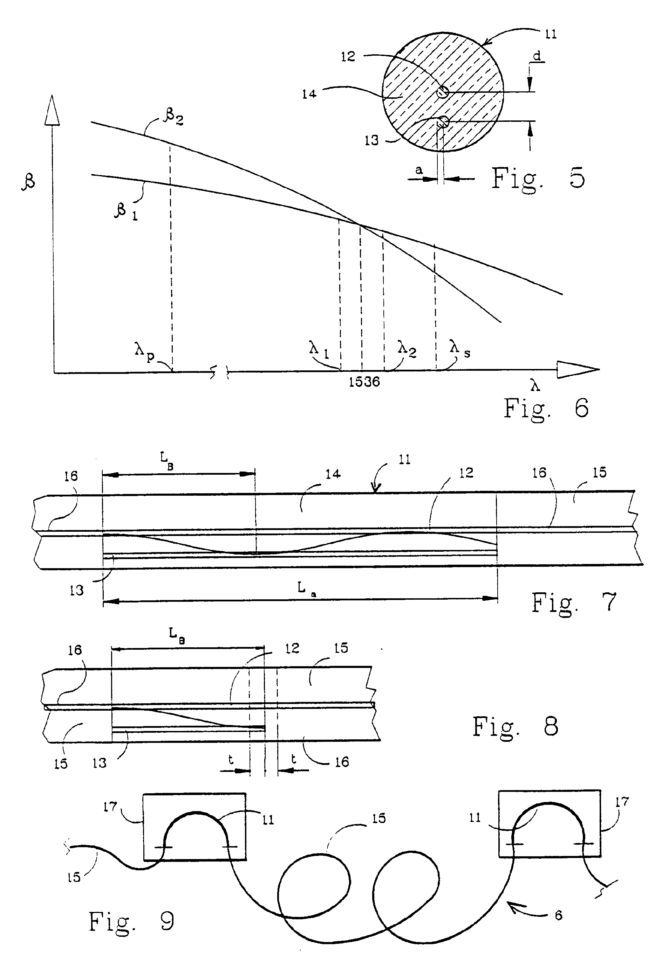

As shown in the diagram of Fig. 2, relating to a fibre incorporating a dopant of the indicated type and symbolically representing the energy states available for an Erbium ion in solution in the fibre's siliceous matrix, the introduction into the active fibre of a luminous power having a pumping wavelength λp, lower than that λs of the transmission signal, leads to a certain number of Er³⁺ ions present as a dopant substance in the fibre to an excited energy state 8, hereinafter defined as pumping band, from which the ions decay spontaneously to an energy level 9, constituting a laser emission level.

In the laser emission level 9 the Er³⁺ ions can remain for a comparatively long time before undergoing a spontaneous transition to the base level 10.

As is known, while the transition from band 8 to level 9 is associated with a thermal type emission, which is dispersed outside the fibre (phononic radiation), the transition from level 9 to the base level 10 generates a luminous emission at a wavelength corresponding to the energy value of laser emission 9. If a fibre containing a high quantity of ions at the laser emission level has a signal having a wavelength corresponding to such emission level passed through it, the signal causes stimulated transition of the ions involved from the emission state to the base state, before their spontaneous decay, with a cascade effect which, at the output of the active fibre, causes the emission of a strongly amplified transmission signal.

In the absence of a transmission signal the spontaneous decay of the laser emission states, which are in a discrete number typical for each substance, generates a luminosity with peaks at various frequencies, corresponding to the available levels. In particular, as illustrated in Fig. 3, a Si/Al or Si/Ge fibre, doped with Er³⁺, suitable for use in optical amplifiers, has a high-intensity emission peak at a wavelength of 1536 nm, while at greater wavelengths, up to about 1560 nm, there is an area in which the emission still has a high intensity, but lower on the other hand than that of the peak area.

In the presence of a luminous signal introduced into the fibre at the wavelength corresponding to the emission peak of Er³⁺, at 1536 nm, there is a very strong amplification of the signal, while the background noise, due to the spontaneous emission of Erbium, remains limited and this make the fibre suitable for use in an optical amplifier for a signal at such a wavelength.

For the generation of the signal there are commercially available and convenient to use lasers of the semiconductor type (In, Ga, As), which have a typical emission band from 1.52 to 1.57 µm. Due to their production technique it is not possible to guarantee that all such lasers will generate a transmission signal at a particular frequency value, corresponding to the emission peak of the fibre doped with Erbium used as an amplifier. On the contrary a large percentage of such commercially available lasers generate pieces with a signal in the sections of the fibre's emission curve adjacent to the above emission peak.

The signal generated by such laser emitters would not be able to be amplified with sufficient gain in an optical amplifier doped with Er³⁺ of the type described above, since the pumping power introduced into the active fibre would for the most part be used to amplify the background noise, which is generated inside the active fibre of the amplifier itself, at the spontaneous emission of Erbium at a wavelength of about 1536 nm.

In order therefore to use laser emitters of the above type, accepting them in a range of production tolerance that is sufficiently wide to make their use inexpensive, in combination with amplifiers using fibres doped with Erbium, (or, more generally, to allow the use of particular types of laser signal emitters in combination with fluorescent dopants having a high background noise due to spontaneous transitions from the laser state) the invention proposes the use of an active fibre such as that illustrated in Fig. 4, which comprises first portions 11 of fibre having two cores, 12 and 13, respectively, enclosed within the same external cladding 14, alternated with second portions 15 of single-core fibre.

In each first portion 11 of double-core fibre, the core 12 is connected to the core 16 of the contiguous portions 15 of single-core fibre and, at the extremities of the active fibre, to the fibre 4 leaving the dichroic coupler and to the line fibre 7, respectively. This core 12 thus conducts the transmission signal. The core 13, or secondary core, is interrupted at the two extremities of each first portion 11 of two-core fibre and has no further connections.

The two cores 12 and 13 of the portions of fibre 11 are provided so that the respective luminous propagation constants β₁ and β₂ within the fibre, whose curves of variation with wavelength are indicated in Fig. 6, are such as to accomplish optical coupling between the two cores 12 and 13 at the wavelength of the maximum emission peak of the fluorescent dopant, in particular at 1536 nm for Erbium, and in a range between λ₁ and λ₂, whose amplitude is determined by the slope of curves λ₁ and λ₂ in their area of intersection and substantially corresponds, as indicated in Fig. 3, to the amplitude of the emission peak itself, generating background noise.

By way of example the preferred coupling range between the two cores 12 and 13, in the case where Erbium is used as the dopant for the core 16 of the second portions 15, can be from λ₁ = 1530 to λ₂ = 1540 nm.

This means that light having a wavelength of about 1536 nm, which is propagated in core 12 together with the transmission signal and which substantially constitutes background noise due to the spontaneous emission of Erbium, is periodically transferred from core 12 to core 13, according to the known laws of optical coupling, described, for example, at pages 84 and 90 of the Journal of The Optical Society of America, A/Vol. 2, No. 1, January 1985.

As represented in Fig. 7, the luminous power at the optical coupling wavelength between the two cores is distributed between the cores according to a substantially sinusoidal curve, reaching 100% in one of the cores at one point of the fibre and after a distance L_{B,} known as the beating length, 100% in the other of the cores, while elsewhere the luminous power is distributed between the two cores.

The transmission signal in core 12, on the other hand, has a wavelength λₛ different from that at which coupling occurs between the two cores 12 and 13, say, equal to 1550 nm. Thus it remains confined in core 12 without transferring to core 13. In the same way the pumping light provided to core 16 by coupler 3, say at a wavelength λₚ of 980 or 540 nm, has propagation constants whereby, within the section of fibre 11, its passage to core 13 is excluded, and within which the absence of pumping energy is thus assured.

Core 13 preferably contains a dopant, in addition to the dopant which determines its desired refraction index profile, which is constituted by a material having a high luminous absorption over the entire spectrum, or at least at the emission peak of the dopant of core 16, a source of noise as previously described, in particular at the peak of about 1536 nm in the case of the use of Erbium as the laser dopant.

Substances suitable for the purpose and having a high luminous absorption over the entire spectrum are for example described in European Patent Application Publication No. 0294037 and, in general, comprise variable valence elements, such as Ti, V, Cr, Fe, in a lower valence state (Ti^{III}, V^{III}, Cr^{III}, Fe^{II}).

Among the substances with a high luminous absorption at a particular wavelength, that is, at the wavelength of the emission peak of the dopant of core 16 of amplifying fibre 15, which it is required to eliminate, it is especially convenient to use the same dopant of the above active core. In fact, a fluorescent substance provided with a sufficient quantity of pumping energy exhibits a certain emission at a particular wavelength, while the same substance when it is not provided with pumping energy absorbs light at the same wavelength at which emission occurred in the presence of pumping.

In particular, in the presence of a core 16 doped with Erbium, the second core 13 of the first portions 11 can also be conveniently doped with Erbium.

In this way, since the Erbium absorption curve is similar to its fluorescence or laser emission curve, illustrated in Fig. 3, there is at the stimulated emission peak, at 1536 nm, a similar absorption peak at the same wavelength.

The fluorescence at the coupling wavelength between the cores, that is, at 1536 nm, which has been transferred to core 13, is thus not transferred back to core 12, within which the transmission signal is guided, because inside core 13 there can be a substantially complete attenuation of the light introduced, by virtue of its absorption by the dopant present.

The emission at the undesired wavelength present in core 16 can thus be introduced into the first portion 11 before it becomes of excessive intensity and, within it, it can be extracted from core 12 and dispersed within core 13, so as not to withdraw pumping energy from the amplification of the transmission signal introduced by core 12 into core 16 of the subsequent second portion 15 and be superimposed on the signal itself.

For this purpose a portion 15, preceding a portion 11, as illustrated in Fig. 4, should be of limited length to avoid an excessive increase in background noise. This length depends on the characteristics of the fibre itself, and in short on its gain. The amplifier may have such portions 15 of length F such as to provide a maximum gain of less than 15 dB, and preferably ranging from 1 to 5 dB, at the coupling wavelength between the cores, and in particular at 1536 nm.

Core 12 of portions 11 can be without any fluorescent dopant, so that the entire amplification gain is entrusted to the portions 15 of the active fibre 6, or it can contain the same dopant as core 16.

The length Lₐ of each portion 11 of two-core fibre is in turn greater than the beating length L_{B}, mentioned above. In addition, the amount of dopant having a high luminous absorption present in it may be such as to determine a quenching length L of core 13 of the fibre which is less by at least one order of magnitude than the beating wavelength L_{B}.

That is L < 1/10 L_{B} (as is known from the law of propagation of optical power in an attenuating medium P = Pₒe^{-αL},
- where α is a coefficient which depends on the fibre's attenuation characteristics and substantially on the quantity of attenuating dopant present in it -
after a length L of fibre the luminous energy in the fibre is reduced by a factor 1/e). Preferably the characteristics of core 13 are such as to have a quenching length L less by two orders of magnitude than the beating wavelength L_{B}.

The core 13 can also be without any attenuating dopant; in which case, as represented in Fig. 8, the portion 11 of two-core fibre should have a length Lₐ = L_{B}, whereby at the end of the second core 13 the luminous power at the wavelength to be eliminated is completely transferred to core 13, so that at the junction with fibre 15 it is dispersed in the cladding of fibre 15.

Such an arrangement is convenient, as it is possible to avoid the introduction of dopants into the two-core fibre, in addition to those which determine its refraction index profile, but, on the other hand, it requires the portions 11 be cut to the required length with a plus or minus tolerance t with respect to the value of the beating wavelength L_{B} not greater than about 10% of L_{B}, so as to ensure at the junction with a portion 15 the substantial absence of the noise wavelength in core 12.

If such tolerance can only be accomplished with practical difficulty, with beating lengths L_{B} below a few centimetres, it is preferable to use attenuating substances in core 13 as described above.

The determination of the dimensions of the portions 11 is such that the propagation constants in the two cores lead to a coupling in the band centred around the wavelength of peak emission (say, 1536 nm), but inevitable manufacturing tolerances can lead to departures from the desired value.

To obtain, then, a fine adjustment of the coupling wavelength the portions 11 of the double-core fibre are curved in an arc, thus inducing internal tensions within the fibre which vary its luminous propagation characteristics and the value of the coupling wavelength as the imposed curvature varies is measured until agreement is reached with the value of the desired wavelength. Then maintaining such configurations of the portions 11 are maintained by constraining the portions 11 to respective support plates 17, as illustrated in Fig. 9, say, by means of an adhesive.

The portions 15 of single-core fibre included between the portions 11 of double-core fibre may be arranged according to requirements within a casing enclosing the amplifier, say, by winding it up into turns, without this having any effect on the behaviour of the amplifier from the point of view of the separation of the wavelength constituting the noise, while the double-core fibres are rigidly constrained in the curvature most suitable for them, as described above and protected against further stresses.

Conveniently, for the purpose of sending on to the subsequent section of the line 7 downstream from the amplifier a transmission signal with no noise, the last section of the amplifier's active fibre 6, in the direction followed by the transmission signal, is constituted by a portion 11 of double-core fibre. For lines to be used in a two-directional manner, preferably both the extremities of the active fibre 6 are constituted by portions 11 of double-core fibre.

The fibre 6 thus executes a filtering action of the light guided within the fibre itself, separating and absorbing the photons at 1536 nm which are generated by spontaneous decay from the laser emission level of Er³⁺ ions, thus preventing such photons, proceeding for a long section in the active core in the presence of pumping energy, from causing further decays at such wavelength and substantially allows the propagation in core 12 only of the transmission wavelength and of the pumping wavelength. The transmission wavelength λₛ can then be selected from the entire range wherein Erbium has a significant value of laser emission, say, between the values λ₂ and λ₃ indicated in Fig. 3, (corresponding to about 1540 - 1560 nm). This allows wide freedom of selection of the laser emitter for the transmission signal, without giving rise to differences in amplification behaviour, and allows use of emitters of signals having various wavelengths, included in a sufficiently wide range to accept the majority of the commercial production of semiconductor lasers (In, Ga, As). At the same time the provision of portions 11 of double-core fibre having smaller length than the portions 15 of single core fibre allows an accurate adjustment of the coupling wavelength and allows the portions 11 to be substantially isolated from mechanical stresses.

As shown by Fig. 5, each portion 11 of the double-core fibre preferably has its first core 12, which is used to guide the optical signal, arranged coaxially inside cladding 14 of the fibre, while the second core 13 is arranged in an eccentric position.

Thus, as illustrated in Figs. 4, 7, 8 the connection between the portions 11 of double-core fibre, the portions 15 of single core fibre and fibres 4 and 7 can be executed in a traditional manner, without the need for special measures, by arranging the extremities of the fibres face to face through traditional junction devices, which accomplish alignment between the fibres by aligning their external surfaces, and thereby align the core 12 of the two-core fibre, in its axial position, with the cores of the single-core fibres, without any substantial junction losses. Core 13, which is in an eccentric position, must not be connected to other cores and thus remains interrupted at the extremities of each portion of double-core fibre 11 without requiring any further operations.

Preferably, so as to have the highest amplifying efficiency, core 12 is monomodal both at the signal wavelength and at the pumping wavelength and core 13 is also monomodal at least at the signal wavelength λₛ.

As an example, an amplifier has been built according to the diagram of Fig. 1, comprising an active fibre 6 of the Si/Al type, doped with Er³⁺, provided with double-core portions; the content by weight of Er₂O₃ in the single-core portions of the fibre was 40 ppm.

In each portion of two-core fibre 11 core 12 and core 13 both had a radius a = 3.1 µm, numerical aperture NA = 0.105, refraction index n₁ = 1.462; the separation of the two cores 12 and 13, indicated in Fig. 5, was d = 3.5 µm; core 12 was coaxial with the external diameter of the fibre.

Each portion 11 had a length Lₐ = 100 mm and was contiguous with a length F of amplifying fibre of 5 m.

Core 12 of each portion of two-core fibre 11 contained no Erbium, while core 13 has a content by weight of Er₂O₃ of 2500 ppm.

The active fibre 6 had a total length of about 30 m.

As the pumping laser 5 there was used an Argon ion laser, operating at 528 nm, with a power of 150 mW, while as the signal emitting laser 2 there was used a commercial-type semiconductor laser (In, Ga, As), having a power of 1 mW, whose emission wavelength was measured at 1550 nm.

Downstream from the amplifier, with the above experimental configuration, a gain of 20 dB was obtained, on an input signal attenuated to a value of 0.5 µW.

The attenuation of the amplifier input signal, suitable for simulating an actual condition of the amplifier's use in a line, was obtained by means of a variable attenuator.

In the absence of a signal a level of spontaneous emission has been measured, downstream from the amplifier, of 10 µW.

Such an emission, which constitutes the background noise produced by the amplifier, does not represent significant noise for the signal, which is amplified to much higher levels (about 250 µW).

As a comparison, the same transmission laser emitter 2 described above has been used in combination with an amplifier having a structure identical with that of the previous example, but using a single-core active fibre 6, of the step-index type Si/Al, doped with Er³⁺, containing, by weight, 40 ppm of Er³⁺ in the core and having a length of 30 m.

Such an amplifier, with a transmission signal at a wavelength of 1560 nm, exhibited a gain of less than 15 dB with a spontaneous emission of a level comparable to that of the output signal.

As can be seen from the examples given, the single-core fibre amplifier has exhibited a reduced gain in the presence of a signal at 1560 nm, while also introducing a noise such as to make it difficult to receive the signal itself, proving it to be unusable for a practical application, while the amplifier according to embodiment of the invention, using an active fibre provided with portions of double-core fibre, with the two cores coupled together at a wavelength corresponding to the emission peak of the background noise, has shown itself able to provide, with the same signal at 1560 nm, a high amplification gain, together with a negligible introduced noise.

Thus the use in a telecommunications line of amplifiers according to the invention allows such line to be made suitable for the transmission of signals generated by commercial type laser emitters, accepting for them a wide production tolerance and, at the same time, ensuring that the amplification performance is substantially constant and independent of the actual emission value of the signal emitter used.

## Claims

1. Wide signal band optical amplifier, particularly for optical fibre telecommunications lines operating with a transmission signal in a predetermined wavelength band, comprising a dichroic coupler (3), suitable for multiplexing a transmission signal and luminous pumping energy in a single outgoing fibre (4), and an active optical fibre (6) containing a fluorescent dopant, connected to the output fibre (4) of the dichroic coupler (3) and to a telecommunications line fibre (7) suitable for receiving and transmitting an amplified signal, characterised in that the active optical fibre (6) comprises alternating first and second portions (11,15), each first portion (11) being constituted by an optical fibre having two cores (12, 13), and each second portion (15) being constituted by an optical fibre having one core (16) containing said fluorescent dopant, the first cores (12) of the first portions being optically connected to the cores (16) of the second portions, and the second cores (13) of the first portions being interrupted at the extremities of the first portions, the two cores (12, 13) of the first portions being optically coupled together in a predetermined wavelength band included in the wavelength range of the laser emission of the fluorescent dopant and different from the transmission signal band, such that emission at said predetermined wavelength range, constituting background noise with respect to the transmission signal, is substantially transferred from the first core to the second core of each first portion.

2. Wide signal band optical amplifier, according to claim 1, characterized in that the second core (13) of each first portion (11) of the active optical fibre (6) contains a dopant having a high luminous absorption in the laser emission range of the active fibre's dopant.

3. Wide signal band optical amplifier, according to claim 2, characterized in that the dopant having a high luminous absorption contained in the second core (13) is constituted by the same fluorescent substance present in the active fibre (6).

4. Wide signal band optical amplifier, according to claim 1, characterized in that the first core (12) of each first portion (11) of the active optical fibre (6) contains a fluorescent dopant.

5. Wide signal band optical amplifier, according to claim 1, characterized in that the first core (12) of each first portion (11) of the active optical fibre (6) has no fluorescent dopant.

6. Wide signal band optical amplifier, according to claim 1, characterized in that the fluorescent dopant substance present in the active fibre (6), at least inside its second portions (15) having single core, is Erbium.

7. Wide signal band optical amplifier, according to claim 2, characterized in that the dopant substance present in the second core (13) is a substance having a high luminous absorption over the entire laser emission range of the active fibre's dopant, chosen among Titanium, Vanadium, Chromium or Iron, which is present at least in part in its lower valence state.

8. Wide signal band optical amplifier, according to claim 1, characterized in that the length (L_{A}) of each first portion (11) is equal to or greater than the beating length (L_{B}) between the first and second cores (12, 13) thereof coupled in the selected coupling band between the cores.

9. Wide signal band optical amplifier, according to claim 1, characterized in that the content of dopant having a high luminous absorption of the second core (13) and the coupling characteristics of the fibre cores (12, 13) are correlated so as to determine in the second core a quenching length less than 1/10th of the beating length between the coupled cores.

10. Wide signal band optical amplifier, according to claim 8, characterized in that the second core (13) has no light absorbing dopant and each two-core fibre portion (11) has a length (L_{A}) equal to a whole multiple of one beating length (L_{B}), with a tolerance of 10% of the beating length itself.

11. Wide signal band optical amplifier, according to claim 6, characterized in that first and second cores are optically coupled together between 1530 and 1540 nm.

12. Wide signal band optical amplifier, according to claim 1, characterized in that the first core (12) of first portion (11) is arranged coaxially with external surface of the fibre forming the first portion and is in alignment with the cores (16) of said second portions (15) of the active fibre (6) and with the cores of the fibres (7) to which the amplifier is connected, while the second core (13), at its extremities, faces cladding material of the adjacent fibres.

13. Wide signal band optical amplifier, according to claim 1, characterized in that at least the first (12) of the two cores of the first portions (11) is suitable for allowing monomodal luminous propagation at the transmission wavelength and at the pumping wavelength.

14. Wide signal band optical amplifier according to claim 1, characterized in that the active fibre (6) has second portions, containing fluorescent dopant, included between two consecutive double-core first portions (11), having a length (F) not greater than that corresponding to a maximum obtainable gain of 15 dB at the coupling wavelength between the first and second cores (12, 13) of the first portions (11).

15. Wide signal band optical amplifier according to claim 14, characterized in that the second portions (15), containing fluorescent dopant, included between two consecutive double-core first portions (11) have a length (F) not greater than that corresponding to a gain between 1 and 5 dB at the coupling wavelength between the first and second cores (12, 13) of the first portions (11).

16. Wide signal band optical amplifier according to claim 1, characterized in that at least one extremity of the active fibre (6) is constituted by a double-core first portion (11).

17. Wide signal band optical amplifier according to claim 1, characterized in that the double-core first portions (11) are mechanically curvable for fine adjustment of the coupling wavelength band between the first and second cores thereof.

18. Wide signal band optical amplifier according to claim 1, characterized in that each double-core first portion (11) is rigidly constrained to a respective support plate (17), substantially undeformable under operational conditions.

19. Wide signal band optical amplifier according to claims 17, 18, characterized in that each double-core first portion (11) is rigidly constrained to the respective support plate (17) in a curvature condition corresponding to the desired coupling wavelength band between the first and second cores (12, 13) thereof.

## Patentansprüche

1. Optischer Breitband-Signalverstärker, insbesondere für mit einem Übertragungssignal in einem vorbestimmten Wellenlängenband betriebene Glasfaser-Telekommunikationsleitungen mit einem dichroitischen Koppler (3) zum Multiplexen eines Übertragungssignals und von Licht-Pumpenergie in einer einzigen Ausgangsfaser (4) und mit einer ein fluoreszierendes Dotiermittel enthaltenden aktiven optischen Faser (6), die an die Ausgangsfaser (4) des dichroitischen Kopplers (3) und an eine Telekommunikationsleitungsfaser (7) angeschlossen ist zum Empfang und zum Übertragen eines verstärkten Signals, dadurch **gekennzeichnet**, daß die aktive optische Faser (6) sich abwechselnde erste und zweite Abschnitte (11, 15) aufweist, wobei die ersten Abschnitte (11) aus einer zwei Kerne (12, 13) aufweisenden optischen Faser und die zweiten Abschnitte (15) aus einer einen Kern (16) aufweisenden optischen Faser mit dem fluoreszierenden Dotiermittel bestehen, wobei die Kerne (12) der ersten Abschnitte optisch mit den Kernen (16) der zweiten Abschnitte verbunden sind und die zweiten Kerne (13) der ersten Abschnitte an den Enden der ersten Abschnitte unterbrochen sind, wobei die beiden Kerne (12, 13) der ersten Abschnitte in einem vorbestimmten Wellenlängenband gekoppelt sind, das im Wellenlängenbereich der Laseremission des fluoreszierenden Dotiermittels liegt und sich vom Übertragungssignalband unterscheidet, so daß die Emission in diesem vorbestimmten Wellenlängenbereich, die bezogen auf das Übertragungssignal ein Hintergrundrauschen darstellt, im wesentlichen vom ersten auf den zweiten Kern jedes ersten Abschnitts übertragen wird.

2. Optischer Breitband-Signalverstärker nach Anspruch 1, dadurch gekennzeichnet, daß der zweite Kern (13) jedes ersten Abschnitts (11) der aktiven optischen Faser (6) ein Dotiermittel enthält, das eine hohe Lichtabsorption im Laseremissionsbereich des Aktivfaserdotiermittels aufweist.

3. Optischer Breitband-Signalverstärker nach Anspruch 2, dadurch gekennzeichnet, daß das im zweiten Kern (13) enthaltene, eine hohe Lichtabsorption aufweisende Dotiermittel aus der gleichen fluoreszierenden Substanz besteht, wie diejenige in der Aktivfaser (6).

4. Optischer Breitband-Signalverstärker nach Anspruch 1, dadurch gekennzeichnet, daß der erste Kern (12) jedes ersten Abschnitts (11) der aktiven optischen Faser (6) ein fluoreszierendes Dotiermittel enthält.

5. Optischer Breitband-Signalverstärker nach Anspruch 1, dadurch gekennzeichnet, daß der erste Kern (12) jedes ersten Abschnitts (11) der aktiven optischen Faser (6) kein fluoreszierendes Dotiermittel aufweist.

6. Optischer Breitband-Signalverstärker nach Anspruch 1, dadurch gekennzeichnet, daß die zumindest in den zweiten Abschnitten (15) mit Einzelkernen der Aktivfaser (6) enthaltene fluoerszierende Dotiermittel Erbium ist.

7. Optischer Breitband-Signalverstärker nach Anspruch 2, dadurch gekennzeichnet, daß die im zweiten Kern (13) enthaltene Dotiermittel eine Substanz ist, die über den gesamten Laser-Emissionsbereich der Aktivfaserdotiersubstanz eine hohe Lichtabsorbtion aufweist, wobei diese Substanz Titanium, Vanadium, Chrom oder Eisen sein kann, das zumindest teilweise in seinem niedrigeren Valenzzustand vorhanden ist.

8. Optischer Breitband-Signalverstärker nach Anspruch 1, dadurch gekennzeichnet, daß die Länge (L_{A}) jeden ersten Abschnitts (11) gleich oder größer ist als die Schwebelänge (L_{B}) zwischen den ersten und zweiten Kernen (12, 13), die im vorbestimmten Kopplungsband zwischen den Kernen gekoppelt sind.

9. Optischer Breitband-Signalverstärker nach Anspruch 1, dadurch gekennzeichnet, daß der Gehalt an hoch-lichtabsorbierendem Dotiermittel des zweiten Kerns (13) und die Kopplungseigenschaften der Faserkerne (12, 13) so aufeinander abgestimmt sind, daß im zweiten Kern eine Dämpfungslänge bestimmt wird, die weniger als 1/10 der Schwebungslänge zwischen den gekoppelten Kernen beträgt.

10. Optischer Breitband-Signalverstärker nach Anspruch 8, dadurch gekennzeichnet, daß der zweite Kern (13) keine lichtabsorbierendes Dotiermittel aufweist und jeder Doppelfaserabschnitt (11) eine Länge (L_{A}) aufweist, die gleich einem ganzen Vielfachen einer Schwebungslänge (L_{B}) ist, mit einer Toleranz von 10% der Schwebungslänge.

11. Optischer Breitband-Signalverstärker nach Anspruch 6, dadurch gekennzeichnet, daß die ersten und zweiten Kerne zwischen 1530 und 1540 nm optisch gekoppelt sind.

12. Optischer Breitband-Signalverstärker nach Anspruch 1, dadurch gekennzeichnet, daß der erste Kern (12) des ersten Abschnitts (11) koaxial zur Außenoberfläche der den ersten Abschnitt bildenden Faser angeordnet ist und mit den Kernen (16) der zweiten Abschnitte (15) der Aktivfaser (6) und mit den Kernen der Fasern (7), an die der Verstärker angeschlossen ist, fluchtet, während der zweite Kern (13) mit seinen Enden an das Mantelmaterial der benachbarten Fasern anschließt.

13. Optischer Breitband-Signalverstärker nach Anspruch 1, dadurch gekennzeichnet, daß zumindest der erste (12) der beiden Kerne der ersten Abschnitte (11) zur monomodalen Licht-Propagation in der Übertragungswellenlänge und der Pumpwellenlänge geeignet ist.

14. Optischer Breitband-Signalverstärker nach Anspruch 1, dadurch gekennzeichnet, daß die Aktivfaser (6) fluoreszierendes Dotiermittel enthaltende zweite Abschnitte aufweist, die zwischen zwei aufeinander folgenden ersten Abschnitten (11) mit Doppelkern eingeschlossen sind mit einer Länge (F), die nicht größer ist als die Länge, die einer maximal erzielbaren Verstärkung von 15 dB bei der Kopplungswellenlänge zwischen dem ersten und zweiten Kern (12, 13) der ersten Abschnitte (11) entspricht.

15. Optischer Breitband-Signalverstärker nach Anspruch 14, dadurch gekennzeichnet, daß die fluoreszierendes Dotiermittel enthaltenden zweiten Abschnitte (15), die zwischen zwei aufeinander folgenden ersten Abschnitten (11) mit Doppelkern eingeschlossen sind, eine Länge (F) aufweisen, die nicht größer ist als die Länge, die einer Verstärkung zwischen 1 und 5 dB bei der Kopplungswellenlänge zwischen dem ersten und zweiten Kern (12, 13) der ersten Abschnitte (11) entspricht.

16. Optischer Breitband-Signalverstärker nach Anspruch 1, dadurch gekennzeichnet, daß zumindest ein Ende der Aktivfaser (6) aus einem ersten Abschnitt (11) mit Doppelkern besteht.

17. Optischer Breitband-Signalverstärker nach Anspruch 1, dadurch gekennzeichnet, daß die ersten Abschnitte (11) mit Doppelkern mechanisch biegbar sind zur Feineinstellung des Kopplungswellenlängenbandes zwischen ihrem ersten und zweiten Kern.

18. Optischer Breitband-Signalverstärker nach Anspruch 1, dadurch gekennzeichnet, daß jeder erste Abschnitt (11) mit Doppelkern auf einer entsprechenden, unter Betriebsbedingungen im wesentlich unverformbaren Halteplatte (17) starr befestigt ist.

19. Optischer Breitband-Signalverstärker nach den Ansprüchen 17, 18, dadurch gekennzeichnet, daß jeder erste Abschnitt (11) mit Doppelkern starr auf der entsprechenden Halteplatte (17) in einem gebogenen Zustand befestigt ist, der dem gewünschten Kopplungswellenlängenband zwischen dem ersten und zweiten Kern (12, 13) entspricht.

## Revendications

1. Amplificateur optique à large bande, en particulier pour lignes de télécommunications à fibres optiques opérant avec un signal de transmission dans une bande de longueur d'onde prédéterminée, comprenant un coupleur (3) dichroïque convenant au multiplexage d'un signal de transmission et d'énergie lumineuse de pompage dans une seule fibre de sortie (4), et une fibre optique active (6) contenant un dopant fluorescent, reliée à la fibre de sortie (4) du coupleur (3) et à une fibre (7) de ligne de télécommunication convenant à la réception et la transmission d'un signal amplifié, caractérisé en ce que la fibre optique active (6) comprend de manière alternée des première et seconde portions (11, 15), chaque première portion (11) étant constituée par une fibre optique ayant deux noyaux (12, 13), et chaque seconde portion (15) étant constituée par une fibre optique ayant un noyau (16) contenant ledit dopant fluorescent, les premiers noyaux (12) des premières portions étant reliés optiquement aux noyaux (16) des secondes portions, et les second noyaux (13) des premières portions étant interrompus aux extrémités des premières portions, les deux noyaux (12, 13) des premières portions étant couplés optiquement l'un à l'autre dans une bande de longueur d'onde prédéterminée incluse dans la gamme de longueur d'onde de l'émission laser du dopant fluorescent, et différente de la bande de signal de transmission, de sorte que l'émission à ladite gamme de longueur d'ondes prédéterminée, qui constitue le bruit de fond à l'égard du signal de transmission, est sensiblement transférée à partir du premier noyau jusqu'au second noyau de chaque première portion.

2. Amplificateur optique à large bande selon la revendication 1, caractérisé en ce que le second noyau (13) de chaque première portion (11) de la fibre optique active (6), contient un dopant ayant une haute absorption lumineuse dans la gamme d'émission laser du dopant de la fibre active.

3. Amplificateur optique à large bande selon la revendication 2, caractérisé en ce que le dopant ayant une haute absorption lumineuse contenu dans le second noyau (13), est constitué par la même substance fluorescente que celle présente dans la fibre active (6).

4. Amplificateur optique à large bande selon la revendication 1, caractérisé en ce que le premier noyau (12) de chaque première portion (11) de la fibre optique active (6) contient un dopant fluorescent.

5. Amplificateur optique à large bande selon la revendication 1, caractérisé en ce que le premier noyau (12) de chaque première portion (11) de la fibre optique active (6) est dépourvu de dopant fluorescent.

6. Amplificateur optique à large bande selon la revendication 1, caractérisé en ce que la substance dopante fluorescente présente dans la fibre active (6), au moins à l'intérieur de ses secondes portions (15) ayant un noyau simple, est de l'Erbium.

7. Amplificateur optique à large bande selon la revendication 2, caractérisé en ce que la substance dopante présente dans le second noyau (13) est une substance ayant une haute absorption lumineuse dans la gamme entière d'émission laser du dopant de la fibre active, choisie parmi le titane, le vanadium, le chrome ou le fer, qui est présente au moins en partie à son état de valence le plus faible.

8. Amplificateur optique à large bande selon la revendication 1, caractérisé en ce que la longueur Lₐ de chaque première portion (11) est supérieure ou égale à la longueur d'interférence L_{b} entre les premier et second noyaux (12,13) de cette portion, couplés dans la bande de couplage sélectionnée.

9. Amplificateur optique à large bande selon la revendication 1, caractérisé en ce que la teneur en dopant ayant une haute absorption lumineuse du second noyau (13), et les caractéristiques de couplage des noyaux (12,13) de fibres, sont corrélées de manière à ce que, dans le second noyau, il existe une longueur d'amortissement inférieure au 1/10 de la longueur d'interférence entre les noyaux couplés.

10. Amplificateur optique à large bande selon la revendication 8, caractérisé en ce que le second noyau (13) est dépourvu de dopant absorbant de lumière, et en ce que chaque portion (11) de fibre à deux noyaux possède une longueur Lₐ égale à un multiple entier de longueur L_{b} d'interférence, avec une tolérance égale à 10% de la longueur d'interférence elle-même.

11. Amplificateur optique à large bande selon la revendication 6, caractérisé en ce que les premier et second noyaux sont couplés optiquement l'un à l'autre entre 1530 et 1540 nm.

12. Amplificateur optique à large bande selon la revendication 1, caractérisé en ce que le premier noyau (12) de la première portion (11) est disposé coaxialement avec la surface externe de la fibre formant la première portion, et se trouve en alignement avec les noyaux (16) desdites secondes portions (15) de la fibre active, et avec les noyaux des fibres (7) auxquelles est connecté l'amplificateur, alors que le second noyau (13), à ses extrémités, fait face au matériau de gainage des fibres adjacentes.

13. Amplificateur optique à large bande selon la revendication 1, caractérisé en ce qu'au moins le premier (12) des deux noyaux des premières portions (11) convient pour permettre une propagation lumineuse monomodale à la longueur d'onde de transmission et à la longueur d'onde de pompage.

14. Amplificateur optique à large bande selon la revendication 1, caractérisé en ce la fibre active (6) présente des secondes portions contenant un dopant fluorescent, incluses entre deux premières portions (11) consécutives à un double noyau, et ayant une longueur F qui n'est pas supérieure à celle correspondant à un gain maximum accessible de 15 dB à la longueur d'onde de couplage entre les premier et second noyaux (12, 13) des premières portions (11).

15. Amplificateur optique à large bande selon la revendication 14, caractérisé en ce que les secondes portions (15) contenant un dopant fluorescent, incluses entre deux premières portions (11) consécutives à un double noyau, ont une longueur F qui n'est pas supérieure à celle correspondant à un gain entre 1 et 5 dB à la longueur d'onde de couplage entre les premier et second noyaux (12, 13) des premières portions (11).

16. Amplificateur optique à large bande selon la revendication 1, caractérisé en ce qu'au moins une extrémité de la fibre active (6) est constituée par une première portion (11) à double noyau.

17. Amplificateur optique à large bande selon la revendication 1, caractérisé en ce les premières portions (11) à double noyau peuvent être recourbées mécaniquement pour un ajustement précis de la bande de longueur d'onde de couplage entre les premier et second noyaux de ces portions.

18. Amplificateur optique à large bande selon la revendication 1, caractérisé en ce que chaque première portion (11) à double noyau est contrainte rigidement sur des plaques (17) de support respectives, sensiblement indéformables dans les conditions opérationnelles.

19. Amplificateur optique à large bande selon les revendications 17 et 18, caractérisé en ce que chaque première portion (11) à double noyau est contrainte rigidement sur des plaques de support (17) respectives dans une condition de courbure correspondant à la bande de longueur d'onde désirée de couplage entre les premier et second noyaux (12, 13) de ces portions.
